# EUROPÄISCHE PATENTSCHRIFT

(11) **EP 2 870 457 B1**
(45) Veröffentlichungstag und Bekanntmachung des Hinweises auf die Patenterteilung: **20.05.2020**
(21) Anmeldenummer: 13732094.1
(22) Anmeldetag: 20.06.2013
(51) Int. Cl.: G01N 15/10

(54) **VERFAHREN ZUM DETEKTIEREN VON PARTIKELN IN EINEM FLUIDSTROM**
METHOD FOR DETECTING PARTICLES IN A FLUID STREAM
PROCÉDÉ DE DÉTECTION DE PARTICULES CONTENUES DANS UN FLUX FLUIDIQUE

(30) Priorität: 03.07.2012 DE 102012013255
(43) Veröffentlichungstag der Anmeldung: 13.05.2015
(73) Patentinhaber: Hydac Filter Systems GmbH, 66280 Sulzbach/Saar (DE)
(72) Erfinder: WILHELM, Andreas, 66763 Dillingen (DE)
(74) Vertreter: Bartels und Partner, Patentanwälte
(86) Internationale Anmeldenummer: PCT/EP2013/001822
(87) Internationale Veröffentlichungsnummer: WO 2014/005673

(56) Entgegenhaltungen:
- EP-A2- 0 766 086
- DE-A1-102006 018 964
- GB-A- 2 004 374

## Beschreibung

Die Erfindung betrifft ein Verfahren zum Detektieren von Partikeln in einem Fluidstrom mit den Merkmalen im Oberbegriff von Anspruch 1.

Ein derartiges Verfahren ist beispielsweise aus WO 2007/088 015 A1 bekannt. Bei dem bekannten Verfahren wird durch mindestens eine Feldspule ein den Fluidstrom zumindest abschnittsweise abdeckendes Magnetfeld erzeugt und über zwei Sensorspulen, die jeweils mit einer Auswerteeinrichtung verbindbar sind, mittels der aus dem in der jeweiligen Sensorspule induzierten Signal die Anwesenheit eines Partikels in dem Fluidstrom detektiert. Durchströmt ein Partikel den von der Feldspule abgedeckten Abschnitt bzw. das Magnetfeld, ändert sich in der jeweiligen Sensorspule die induzierte Spannung derart, dass über die Auswerteeinrichtung ein Detektionssignal abgegriffen und ausgewertet werden kann. Bei dem bekannten Verfahren werden zwei Sensorspulen mit gegensinniger Wicklung eingesetzt, wodurch die Empfindlichkeit hinsichtlich der zu detektierenden Partikel erhöht wird und beispielsweise auch kleinere Partikel mit einer Größe von 50 bis 100 Mikrometer detektiert werden können.

Mittels derartiger Verfahren werden in einem System zum Kühlen und/oder zum Schmieren von Komponenten einer Antriebseinheit mittels eines Fluides, insbesondere zum Kühlen und/oder zum Schmieren eines Getriebes einer Windkraftanlage, Partikel in dem Fluid bzw. Fluidstrom detektiert. Die Wartung derartiger Systeme in Windkraftanlagen ist aufgrund des hoch gelegenen Einbauortes des Getriebes besonders aufwendig. Es ist daher wünschenswert, durch Abrieb von mechanischen Komponenten der Antriebseinheit oder durch Schmutzeintrag von außen hervorgerufene Partikelbelastungen und damit möglicherweise einhergehende Schäden am Kühl- und/ oder Schmiersystem frühzeitig zu erkennen. In dem durch das jeweilige System geführten Fluid können zusätzlich zu den Partikeln Gasblasen, insbesondere Luftblasen, eingeschlossen sein, welche mitunter ebenfalls als Partikel detektiert werden. Durch die Fehlerkennung von Luftblasen als Partikel wird die Schadensfrüherkennung beeinträchtigt, da ein tatsächlicher Anstieg der Partikelzählrate erst über das den Luftblasensignalen zuzuordnende Rauschen hinaus erfolgen darf. Folglich wird mitunter eine zu hohe Partikelbelastung angezeigt und zu früh ein möglicher Schaden angezeigt.

Die EP 0 766 086 A2 beschreibt ein Verfahren zum Detektieren von Partikeln in einem Fluidstrom, umfassend die Erzeugung eines vom Fluidstrom passierbaren Messfeldes, die Aufnahme und Auswertung von Messwerten bei das Messfeld passierendem Fluidstrom, und die Detektion mindestens eines Partikels durch jeweils eine charakteristische Abfolge von Messwerten, wobei die charakteristische Abfolge von Messwerten jeweils dahingehend aufgenommen und ausgewertet wird, ob ein Partikel oder eine Gasblase das Messfeld passiert, wobei die Messwerte jeweils für einen Beobachtungszeitraum aufgenommen und ausgewertet werden, der größer ist als die Messdauer einer für einen Partikel und/oder für eine Gasblase charakteristischen Abfolge von Messwerten. Die Detektierung von tieferen Frequenzen lässt dabei auf das Vorhandensein eines Partikels schließen.

Weitere Partikelmessverfahren gehen aus der GB 2 004 374 A und der DE 10 2006 018 964 A1 hervor.

Die Erfindung stellt sich die Aufgabe, ein Verfahren zum Detektieren von Partikeln in einem Fluidstrom bereitzustellen, welches in zuverlässiger Weise die Feststellung der tatsächlichen Partikelbelastung des Fluides in einem Fluidstrom ermöglicht.

Diese Aufgabe wird gelöst durch ein Verfahren mit den Merkmalen von Patentanspruch 1 in seiner Gesamtheit.

Das erfindungsgemäße Verfahren zeichnet sich dadurch aus, dass, sobald die Messwerte über den Beobachtungszeitraum durchlaufen und analysiert sind, bestimmt wird, ob maximal zwei oder mehr Extremstellen gezählt worden sind.

Es wird die charakteristische Abfolge von Messwerten jeweils dahingehend aufgenommen und ausgewertet, ob ein Partikel oder eine Gasblase das Messfeld passiert.

Typischerweise werden als Gasblasen Luftblasen detektiert. Die Gas- bzw. Luftblasen können aufgrund von Schaum in Getrieben, welche mittels des Fluides im Fluidstrom geschmiert werden, auftreten. Das Getriebe ist insbesondere ein Windkraftgetriebe, welches an seinem hoch gelegenen Einbauort schwer zugänglich ist. Erfindungsgemäß findet eine Gasblasenerkennung dahingehend statt, dass eine Gasblase als solche erkannt und von einem Partikel unterschieden wird. Zur relevanten Partikelbelastung, anders ausgedrückt Partikelverschmutzung, werden ausschließlich die tatsächlich im Fluid bzw. Fluidstrom vorhandenen Partikel hinzugezählt.

Das erfindungsgemäße Verfahren kann dazu eingesetzt werden, die Belastung bzw. Verschmutzung eines Fluidstroms mit Partikeln zu messen und zu überwachen. Es ist jedoch auch denkbar, die Belastung eines Fluidstroms mit Gasblasen und beispielsweise eine zugehörige Schaumbildung zu messen und zu überwachen. Das erfindungsgemäße Verfahren ist nicht auf Fluide bzw. Fluidströme in einem System zum Kühlen und/oder Schmieren von Komponenten einer Antriebseinheit, wie einem Getriebe, begrenzt einsetzbar. Weitere Anwendungen in der Herstellung, im Transport sowie in der Verarbeitung von Fluiden jedweder Art sind möglich.

In einer bevorzugten Variante des erfindungsgemäßen Verfahrens werden die Messwerte jeweils für einen Beobachtungszeitraum aufgenommen und ausgewertet, der größer ist als die Messdauer einer für einen Partikel und/ oder für eine Gasblase charakteristischen Abfolge von Messwerten. Diese Variante des Verfahrens bietet sich insbesondere dann an, wenn die für ein Partikel charakteristische Abfolge von Messwerten eine andere Messdauer aufweist als die für eine Gasblase charakteristische Abfolge von Messwerten. Sobald ein Partikel oder eine Gasblase durch die zugehörige charakteristische Abfolge von Messwerten detektiert wird, wird durch eine Beobachtung des weiteren Verlaufs der Messwerte über die jeweilige Messdauer hinaus überprüft, ob die gemessene Abfolge tatsächlich für einen Partikel oder für eine Gasblase charakteristisch ist. Bevorzugterweise beträgt der Beobachtungszeitraum mindestens das Doppelte, vorzugsweise das 3,5-fache, der entsprechenden Messdauer.

Die für einen Partikel charakteristische Abfolge von Messwerten weist typischerweise eine Signalform auf, und entsprechend weist eine weitere für eine Gasblase charakteristische Abfolge von Messwerten eine weitere Signalform auf. Weiter können die Signalform für einen Partikel und die weitere Signalform für eine Gasblase zumindest teilweise übereinstimmen, mit anderen Worten zumindest abschnittsweise dem gleichen Verlauf folgen. In dieser bevorzugten Variante kann das erfindungsgemäße Verfahren sehr effizient, d.h. mit geringem Zeit- bzw. Messaufwand, durchgeführt werden, da zunächst das durch die kürzere Signalform charakterisierte Teilchen, ein Partikel oder eine Gasblase, detektiert wird und durch eine sich unmittelbar anschließende weitere Messung festgestellt wird, ob tatsächlich dieses Teilchen oder das durch eine längere Signalform charakterisierte Teilchen, eine Gasblase oder ein Partikel, im Fluidstrom vorliegt.

Beispielsweise kann die Signalform für einen Partikel mindestens ein Extremum, vorzugsweise zwei Extrema, aufweisen und/oder einem periodischen Verlauf, vorzugsweise einem Sinusverlauf, folgen. Auch die weitere Signalform für eine Gasblase kann mindestens drei Extrema, vorzugsweise vier Extrema, aufweisen und/oder einem periodischen Verlauf, vorzugsweise Sinusverlauf, folgen. Das jeweilige Extremum wird zweckmäßigerweise durch Überschreiten und anschließendes Unterschreiten eines oberen Grenzwertes oder durch Unterschreiten und anschließendes Überschreiten eines unteren Grenzwertes der aufgenommenen Messwerte erkannt und ausgewertet. Bei Signalformen für den Partikel und die Gasblase mit einer unterschiedlichen Anzahl von Extremwerten bzw. Extrema kann durch die Anzahl der nacheinander gemessenen Extrema bestimmt werden, ob ein Partikel oder eine Gasblase im Fluid vorliegt.

Um eine Verfälschung des Messergebnisses durch ein Rauschen der Messwerte zu vermeiden, wird dieses in einer bevorzugten Variante der Erfindung derart berücksichtigt, dass ausschließlich Messwerte außerhalb eines vorgegebenen Rauschbandes zwischen einem unteren Rauschwert und einem oberen Rauschwert berücksichtigt werden.

Weitere Vorteile und Merkmale der Erfindung ergeben sich aus den Figuren und der nachfolgenden Beschreibung der Zeichnung. Die vorstehend genannten und die weiter angeführten Merkmale können erfindungsgemäß jeweils einzeln oder in beliebigen Kombinationen bei dem erfindungsgemäßen Verfahren verwirklicht sein. Die in den Figuren gezeigten Merkmale sind rein schematisch und nicht maßstäblich zu verstehen. Es zeigen:
- Fig. 1a und 1b: ein beispielhaftes Ablaufschema des erfindungsgemäßen Verfahrens; und
- Fig. 2a bis 2b: jeweils einen für einen bestimmten Beobachtungszeitraum aufgenommenen und ausgewerteten Verlauf von Messwerten unter Berücksichtigung eines Rauschbandes, eines unteren und eines oberen Grenzwertes, einer für einen Partikel charakteristischen Abfolge von Messwerten und/oder einer weiteren für eine Gasblase charakteristischen Abfolge von Messwerten.

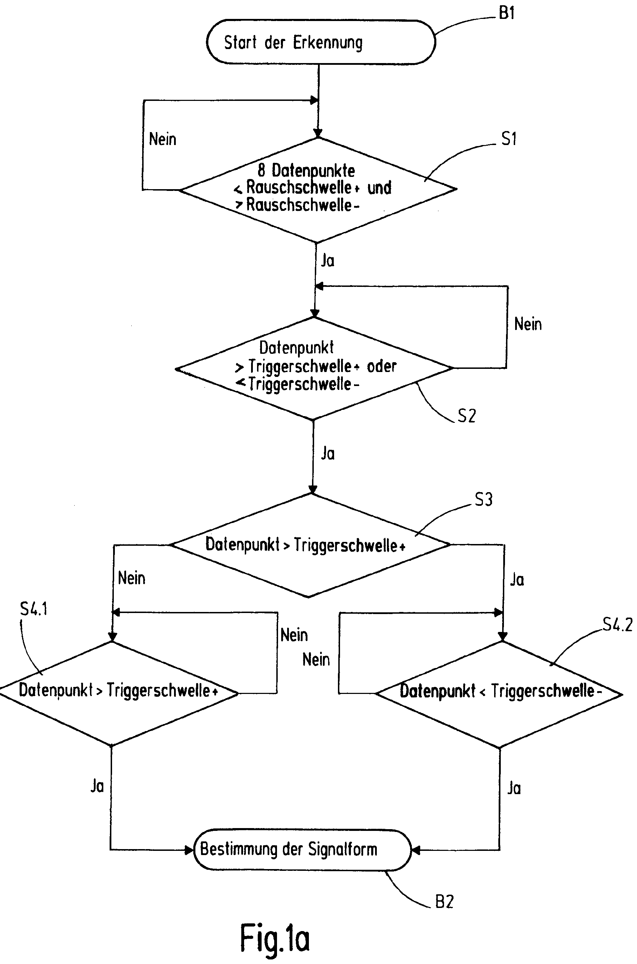

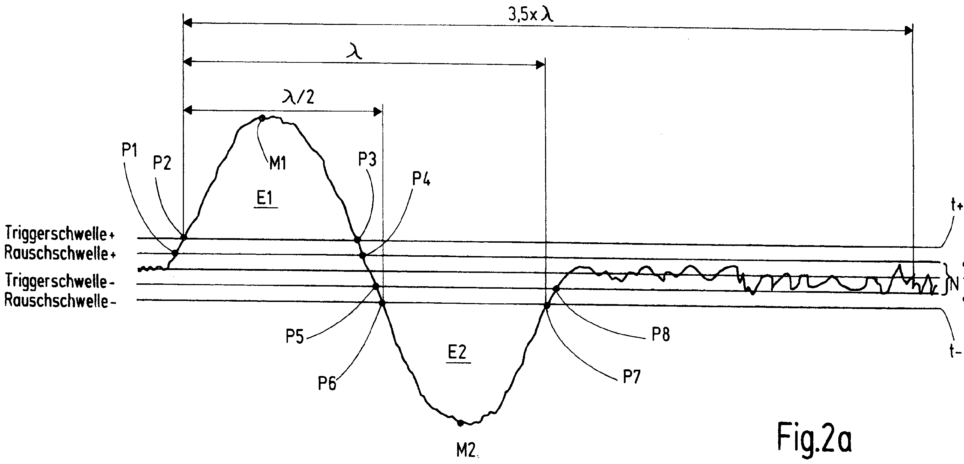

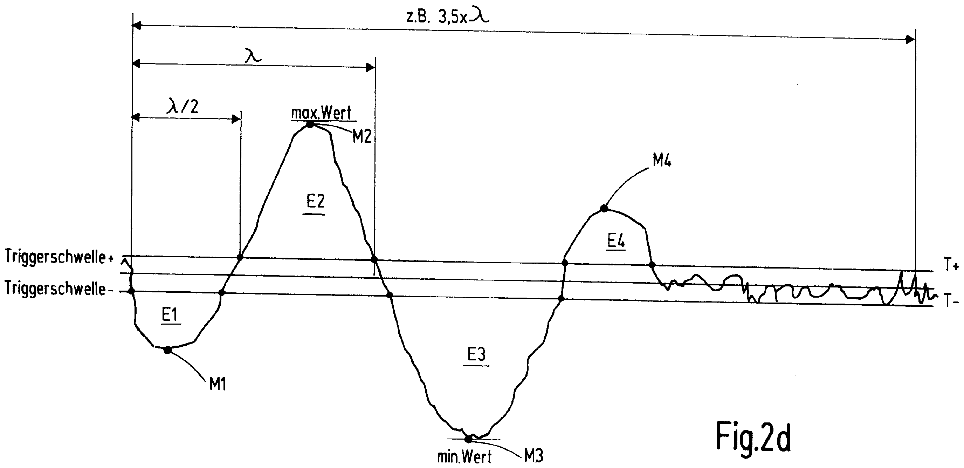

In Figur 1a sind die Schritte des erfindungsgemäßen Verfahrens vom ersten Start B1 der Erfassung einer charakteristischen Abfolge von Messwerten zum zweiten Start B2 der Erkennung bzw. Überprüfung, ob ein Partikel oder eine Gasblase detektiert worden ist, gezeigt. Im ersten Schritt S1 wird überprüft, ob acht Messwerte bzw. Datenpunkte innerhalb eines Rauschbandes liegen. Das Rauschband wird durch einen oberen Rauschwert, Noiselevel +, und einen unteren Rauschwert, Noiselevel-, festgelegt. Im gezeigten Ausführungsbeispiel wird ein Partikel durch eine Signalform mit zwei aufeinanderfolgender Extrema E1, E2 und eine Gasblase durch eine weitere Signalform mit vier aufeinanderfolgenden Extrema E1-E4 charakterisiert. In den Fig. 2a bis 2c ist jeweils die Signalform für einen Partikel und in Figur 2d die weitere Signalform für eine Gasblase gezeigt. Eine Pause zwischen zwei aufeinanderfolgenden, für einen Partikel oder eine Gasblase charakteristischen Signalformen, anders ausgedrückt eine Pause zwischen zwei Signalen, wird über mindestens acht Messwerte bzw. Datenpunkte innerhalb des Rauschbandes N erkannt. Solange nicht mindestens acht Datenpunkte innerhalb des Rauschbandes N liegen, könnte beispielsweise eine vorangehende, für einen Partikel oder eine Gasblase charakteristische Abfolge von Messwerten bzw. Signalfolge noch nicht abgeschlossen sein. Eine charakteristische Signalform, anders ausgedrückt ein Signal, weist weit mehr als acht Messwerte bzw. Datenpunkte P1-P8 auf.

Im zweiten Schritt S2 wird abgefragt, ob die Datenpunkte bzw. Messwerte einen oberen Triggerlevel t+ überschreiten oder einen unteren Triggerlevel t- unterschreitet. Der obere Triggerlevel t+ und der untere Triggerlevel t- stellen insoweit einen oberen Grenzwert und einen unteren Grenzwert dar. Bei dem in Fig. 2a gezeigten Verlauf der Messwerte bzw. des Messsignals erfüllen die zwischen den Datenpunkten P2 und P3 liegenden Messwerte sowie die zwischen den Datenpunkten P6 und P7 liegenden Messwerte diese Bedingung.

Im dritten Schritt S3 wird ausgewertet, ob ein Maximum mit Messwerten oberhalb des oberen Triggerlevels t+ oder ein Minimum mit Messwerten unterhalb des unteren Triggerlevels t- vorliegt. In Fig. 2a ist ein Messsignal mit einem Maximalwert M1 als erstes Extremum E1 zwischen den Datenpunkten P2 und P3 sowie einem Minimalwert M2 als zweitem Extremum E2 zwischen den Datenpunkten P6 und P7 gezeigt.

Im vierten Schritt S4.1 für ein Minimum und S4.2 für ein Maximum wird die Länge λ/2 der ersten Halbwelle bestimmt. In dem gezeigten Ausführungsbeispiel sind die für einen Partikel bzw. eine Gasblase charakteristischen Signalformen einem Sinusverlauf folgend ausgebildet, so dass die Wellenlänge λ einer für einen Partikel charakteristischen Sinuswelle mit zwei Extrema E1, E2 der Messdauer dieser charakteristischen Abfolge von Messwerten entspricht. Der Beginn der ersten Halbwelle ist beim Über- bzw. Unterschreiten des jeweils zugeordneten Triggerlevels t+, t- und das Ende der ersten Halbwelle durch das Unter- bzw. Überschreiten des jeweils entgegengesetzten Triggerlevels t-, t+ festgelegt. Sobald der jeweils entgegengesetzte Triggerlevel t+, t- unter- bzw. überschritten, anders ausgedrückt durchbrochen ist, ist die Bedingung für den Signaltrigger erfüllt und aus der Länge λ/2 der ersten Halbwelle wird die gesamte Wellenlänge λ der Sinuswelle bzw. Sinuskurve berechnet.

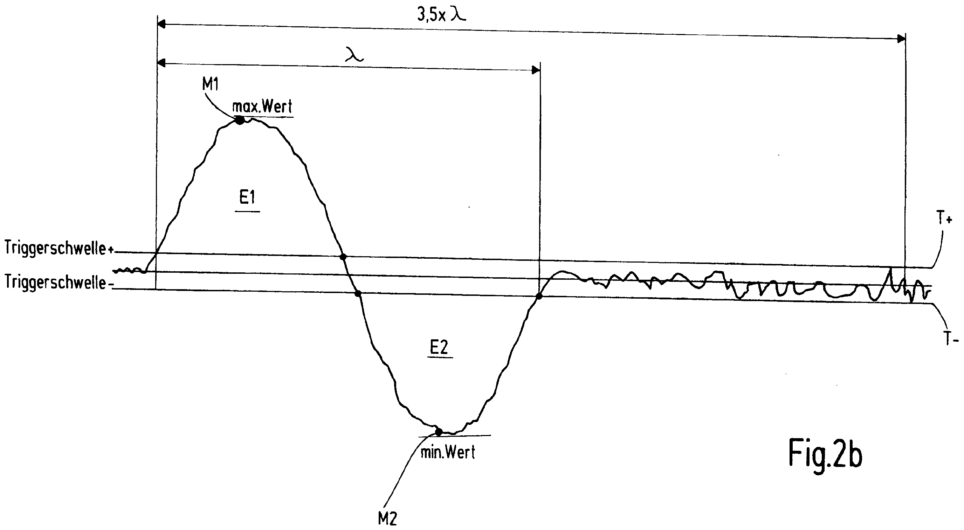

Für die sich anschließende, beim zweiten Start B2 beginnende Bestimmung der gemessenen Signalform und entsprechend des detektierten Teilchens, eines Partikels oder einer Gasblase, wird die Wellenlänge λ, vorzugsweise das 3,5-fache der Wellenlänge λ, in einem Analysepuffer gespeichert. Der anschließend auszuwertende Beobachtungszeitraum beginnt beim ersten Über- bzw. Unterschreiten des zugeordneten Triggerlevels t+, t-, in Fig. 2a am Datenpunkt P2, und endet nach dem 3,5-fachen der Wellenlänge λ ab dem genannten Zeit- bzw. Datenpunkt P2. Die Darstellungen der Fig. 2b-2d unterscheiden sich von der Darstellung der Fig. 2a darin, dass hier jeweils kein Rauschband eingezeichnet ist.

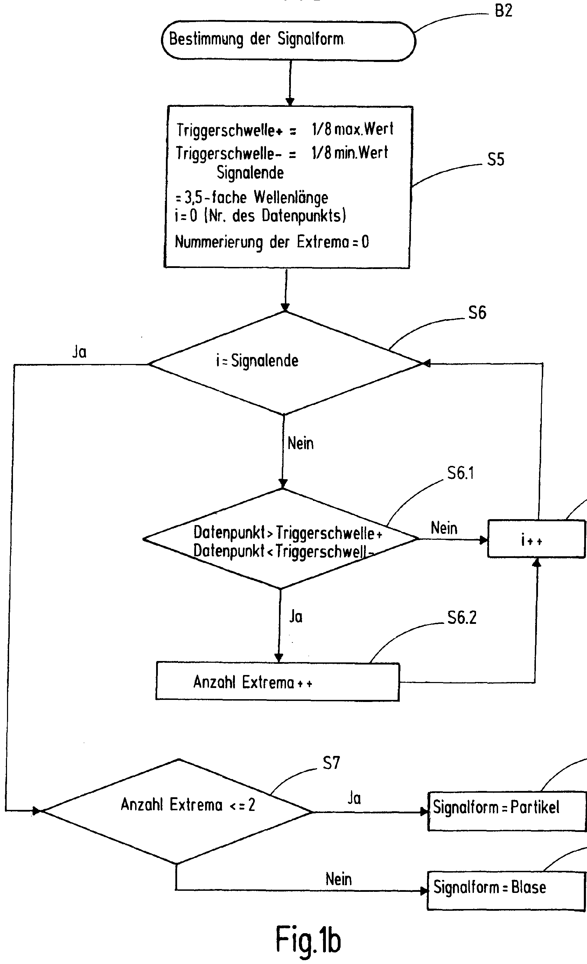

In Fig. 1b sind die Schritte des erfindungsgemäßen Verfahrens der Bestimmung der Signalform vom zweiten Start B2 zu zwei alternativen Ergebnissen, Ergebnis R1 für einen Partikel oder Ergebnis R2 für eine Gasblase, gezeigt. Im fünften Schritt S5 werden aus den Amplituden der gemessenen Sinuswelle, anders ausgedrückt den Extremwerten M1, M2 der beiden Extrema E1, E2 ein oberer Grenzwert T + und ein unterer Grenzwert T- berechnet. Im gezeigten Ausführungsbeispiel beträgt der jeweilige Grenzwert T +, T- jeweils 1/8 des zugeordneten Extremwertes M1, M2. Es versteht sich, dass hiervon abweichende Teilverhältnisse wählbar sind. Liegen vergleichbar der Darstellung in Fig. 2d zwei oder mehr Maxima E2, E4 und/ oder zwei oder mehr Minima E1, E3 vor, wird zur Bestimmung des oberen Grenzwertes T + und des unteren Grenzwertes T- jeweils das globale Maximum und das globale Minimum, in Fig. 2d das als Maximum ausgebildete zweite Extremum E2 und das als Minimum ausgebildete dritte Extremum E3, herangezogen.

Des Weiteren wird die Länge des Beobachtungszeitraums auf das 3,5-fache der Wellenlänge λ festgesetzt, wobei hiervon abweichende Vielfache, beispielsweise das 2-fache, denkbar sind. Die Nummerierung der Datenpunkte bzw. Messwerte und die Nummerierung der Extrema werden jeweils auf 0 zurückgesetzt. Der nunmehr ausgewertete und analysierte Beobachtungszeitraum beginnt beim ersten Über- bzw. Unterschreiten des zugeordneten Grenzwertes T +, T- und endet nach dem 3,5-fachen der Wellenlänge λ ab dem genannten Datenpunkt bzw. Messwert. Neben der Wellenlänge λ sind in einem Zwischenspeicher oder Analysepuffer für das jeweilige Extremum E1-E4 jeweils mindestens ein Datenpunkt bzw. Messwert, zweckmäßigerweise der jeweilige Extremwert M1-M4, abgelegt.

Die im Zwischenspeicher bzw. Analysepuffer abgelegten Datenpunkte bzw. Extremwerte M1-M4 werden im sechsten Schritt S6 auf die Anzahl der vorhandenen Extrema E1-E4 bzw. Extremstellen überprüft. Ausgehend vom ersten Extremwert M1, welcher oberhalb des oberen Grenzwertes T + oder unterhalb des unteren Grenzwertes T- liegt, wird die Anzahl 1 der Extrema E1-E4 bei einem Unter- bzw. Überschreiten des jeweils entgegensetzten Grenzwertes T-, T + jeweils inkrementiert, das heißt um 1 erhöht.

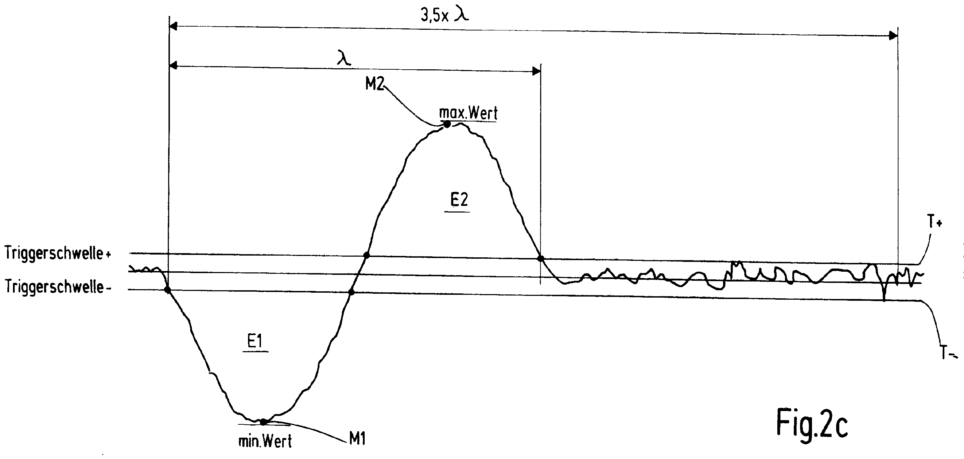

Sobald die Messwerte über den Beobachtungszeitraum durchlaufen und dabei analysiert sind, wird im siebten Schritt S7 bestimmt, ob maximal zwei oder mehr Extremstellen gezählt worden sind. Zwei Extremstellen E1, E2 entsprechend der Darstellungen in den Fig. 2b und 2c zeigen entsprechend des Signaltyps bzw. der charakteristischen Signalform als Ergebnis 1 R1 einen Partikel an. Vier Extrema E1-E4 zeigen entsprechend der Darstellung der Fig. 2d die für eine Gasblase charakteristische weitere Signalform an und führen zum Ergebnis R2.

Die Darstellungen der Fig. 2b und 2d unterscheiden sich dadurch, dass in Fig.2b ein globales Minimum E2 auf ein globales Maximum E1 folgt und in Fig. 2c ein globales Maximum E2 auf ein globales Minimum E1 folgt. In Fig. 2d ist eine Aufeinanderfolge eines lokalen Minimums E1, eines globalen Maximums E2, eines globalen Minimums E3 und eines lokalen Maximums E4 gezeigt. Für die Detektion einer Gasblase entscheidend ist die Anzahl von mehr als zwei Extremstellen E1-E4. Es können somit sämtliche Extrema E1-E4 die gleiche Amplitude, anders ausgedrückt betragsmäßig gleiche Extremwerte M1-M4, aufweisen. Weiter kann das im Beobachtungszeitraum gemessene Signal in Abkehr von einem Sinusverlauf ein Rechtecksignal, Dreiecksignal oder ähnliches sein.

Die in Fig. 2d gezeigten lokalen Extrema, das lokale Minimum E1 als erstes Extremum und das lokale Maximum M4 als viertes Extremum stellen eine Art An- und Abschwinger für eine Aufeinanderfolge von zwei globalen Extrema, dem globalen Maximum E2 und dem globalen Minimum E3, welche charakteristisch für einen Partikel sind, dar. Bei der Situation der Fig. 2d wird durch den Beginn des Minimums E1 als erstes Extremum sowie das sich anschließende Überschreiten des oberen Grenzwertes T+ die Länge λ/2 der Halbwelle bestimmt und entsprechend die Wellenlänge λ berechnet und die Länge des Beobachtungszeitraums festgelegt.

## Patentansprüche

1. Verfahren zum Detektieren von Partikeln in einem Fluidstrom, umfassend:
- die Erzeugung eines vom Fluidstrom passierbaren Messfeldes,
- die Aufnahme und Auswertung von Messwerten bei das Messfeld passierendem Fluidstrom, und
- die Detektion mindestens eines Partikels durch jeweils eine charakteristische Abfolge von Messwerten,
wobei die charakteristische Abfolge von Messwerten jeweils dahingehend aufgenommen und ausgewertet wird, ob ein Partikel oder eine Gasblase das Messfeld passiert, wobei die Messwerte jeweils für einen Beobachtungszeitraum aufgenommen und ausgewertet werden, der größer ist als die Messdauer einer für einen Partikel und/oder für eine Gasblase charakteristischen Abfolge von Messwerten, **dadurch gekennzeichnet, dass**, sobald die Messwerte über den Beobachtungszeitraum durchlaufen und analysiert sind, bestimmt wird, ob maximal zwei oder mehr Extremstellen gezählt worden sind.

2. Verfahren nach Anspruch 1, **dadurch gekennzeichnet, dass** der Beobachtungszeitraum mindestens das Doppelte, vorzugsweise das 3,5-fache, der entsprechenden Messdauer beträgt.

3. Verfahren nach einem der vorhergehenden Ansprüche, **dadurch gekennzeichnet, dass** die für einen Partikel charakteristische Abfolge von Messwerten eine bestimmte Signalform aufweist, und dass eine weitere für eine Gasblase charakteristische Abfolge von Messwerten eine weitere Signalform aufweist.

4. Verfahren nach Anspruch 3, **dadurch gekennzeichnet, dass** die Signalform für einen Partikel und die weitere Signalform für eine Gasblase zumindest teilweise übereinstimmen.

5. Verfahren nach Anspruch 3 oder 4, **dadurch gekennzeichnet, dass** die Signalform für einen Partikel mindestens ein Extremum (E1, E2), vorzugsweise zwei Extrema, aufweist und/oder einem periodischen Verlauf, vorzugsweise einem Sinusverlauf, folgt.

6. Verfahren nach einem der Ansprüche 3 bis 5, **dadurch gekennzeichnet, dass** die weitere Signalform für eine Gasblase mindestens drei Extrema (E1-E4), vorzugsweise vier Extrema, aufweist und/oder einem periodischen Verlauf, vorzugsweise einem Sinusverlauf, folgt.

7. Verfahren nach Anspruch 5 oder 6, **dadurch gekennzeichnet, dass** das jeweilige Extremum (E1-E4) durch Überschreiten und anschließendes Unterschreiten eines oberen Grenzwertes (T+) oder durch Unterschreiten und anschließendes Überschreiten eines unteren Grenzwertes (T-) der aufgenommenen Messwerte erkannt und ausgewertet wird.

8. Verfahren nach einem der vorhergehenden Ansprüche, **dadurch gekennzeichnet, dass** ein Rauschen der Messwerte derart berücksichtigt wird, dass ausschließlich Messwerte außerhalb eines vorgegebenen Rauschbandes (N) zwischen einem unteren Rauschwert und einem oberen Rauschwert berücksichtigt werden.

9. Verfahren nach einem der vorhergehenden Ansprüche, **dadurch gekennzeichnet, dass** als Gasblasen Luftblasen detektiert werden.

## Claims

1. Method for detecting particles in a fluid flow, comprising:
- the generation of a measuring field through which the fluid flow can pass,
- the recording and evaluation of measured values in the fluid flow passing through the measuring field, and
- the detection of at least one particle by one characteristic sequence of measured values in each case,
wherein the characteristic sequence of measured values is recorded and evaluated in each case according to whether a particle or a gas bubble passes through the measuring field, wherein the measured values are recorded and evaluated in each case for an observation period which is greater than the measurement duration of a sequence of measured values characteristic of a particle and/or a gas bubble, **characterised in that** as soon as the measured values have passed through the observation period and been analysed, it is determined whether a maximum of two or more extreme points have been counted.

2. Method according to Claim 1, **characterised in that** the observation period is at least twice, preferably 3.5 times, the corresponding measurement duration.

3. Method according to one of the preceding claims, **characterised in that** the sequence of measured values characteristic of a particle has a certain waveform and that a further sequence of measured values characteristic of a gas bubble has another waveform.

4. Method according to claim 3, **characterised in that** the waveform for a particle and the other waveform for a gas bubble match at least partially.

5. Method according to claim 3 or 4, **characterised in that** the waveform for a particle has at least one extremum (E1, E2), preferably two extrema, and/or follows a periodic wave, preferably a sine wave.

6. Method according to one of claims 3 to 5, **characterised in that** the other waveform for a gas bubble has at least three extrema (E1-E4), preferably four extrema, and/or follows a periodic wave, preferably a sine wave.

7. Method according to claim 5 or 6, **characterised in that** the respective extremum (E1-E4) is detected and evaluated by exceeding and subsequently failing to reach an upper limit value (T+) or by failing to reach and subsequently exceeding a lower limit value (T-) of the measured values recorded.

8. Method according to one of the preceding claims, **characterised in that** a noise of the measured values is taken into account in such a manner that only measured values outside a predetermined noise band (N) between a lower noise value and an upper noise value are taken into account.

9. Method according to one of the preceding claims, **characterised in that** air bubbles are detected as gas bubbles.

## Revendications

1. Procédé de détection de particules dans un flux fluidique, comprenant :
- la production d'un champ de mesure dans lequel le flux fluidique peut passer,
- l'enregistrement et l'exploitation de valeurs de mesure alors que le flux fluidique passe dans le champ de mesure, et
- la détection d'au moins une particule par, respectivement, une suite caractéristique de valeurs de mesure,
dans lequel on enregistre et on exploite la suite caractéristique de valeurs de mesure si une particule ou une bulle de gaz passe dans le champ de mesure, les valeurs de mesure étant enregistrées et exploitées pendant un laps de temps d'observation, qui est plus grand que la durée de mesure d'une suite, caractéristique pour une particule et/ou une bulle de gaz, de valeurs de mesure, **caractérisé en ce que**, dès que les valeurs de mesure ont parcouru le laps de temps d'observation et sont analysées, on détermine si au maximum deux ou plusieurs points extrêmes ont été comptés.

2. Procédé suivant la revendication 1, **caractérisé en ce que** le laps de temps d'observation représente au moins deux fois, de préférence 3,5 fois, la durée de mesure correspondante.

3. Procédé suivant l'une des revendications précédentes, **caractérisé en ce que** la suite caractéristique pour une particule de valeurs de mesure a une forme de signal déterminée et **en ce qu'**une autre suite caractéristique d'une bulle de gaz de valeurs de mesure a une autre forme de signal.

4. Procédé suivant la revendication 3, **caractérisé en ce que** la forme de signal pour une particule et l'autre forme de signal pour une bulle de gaz coïncident au moins en partie.

5. Procédé suivant la revendication 3 ou 4, **caractérisé en ce que** la forme de signal pour une particule a au moins un extremum (E1, E2), de préférence deux extrema et/ou suit une courbe périodique, de préférence une courbe sinusoïdale.

6. Procédé suivant l'une des revendications 3 à 5, **caractérisé en ce que** l'autre forme de signal pour une bulle de gaz a au moins trois extrema (E1 à E4), de préférence quatre extrema, et/ou suit une courbe périodique, de préférence une courbe sinusoïdale.

7. Procédé suivant la revendication 5 ou 6, **caractérisé en ce que** l'on détecte et l'on exploite l'extremum (E1 à E4) respectif par surdépassement et ensuite sous-dépassement d'une valeur (T+) limite supérieure ou par sous-dépassement et ensuite surdépassement d'une valeur (T-) limite inférieure des valeurs de mesure enregistrées.

8. Procédé suivant l'une des revendications précédentes, **caractérisé en ce que** l'on tient compte d'un bruit des valeurs de mesure en tenant compte exclusivement des valeurs de mesure à l'extérieur d'une bande (N) de bruit donnée à l'avance entre une valeur de bruit inférieure et une valeur de bruit supérieure.

9. Procédé suivant l'une des revendications précédentes, **caractérisé en ce que** l'on détecte des bulles d'air comme bulles de gaz.
